Europäisches Patentamt

European Patent Office

Office européen des brevets

(19)

(11) Publication number: **0 186 263**
**A2**

(12)

# EUROPEAN PATENT APPLICATION

(21) Application number: **85306719.7**

(22) Date of filing: **20.09.85**

(51) Int. Cl.⁴: **F 16 C 17/12**

(30) Priority: **01.10.84 US 656399**

(43) Date of publication of application:
**02.07.86 Bulletin 86/27**

(84) Designated Contracting States:
**CH DE FR GB IT LI SE**

(71) Applicant: **THE GARRETT CORPORATION**
**9851-9951 Sepulveda Boulevard P.O. Box 92248**
**Los Angeles, California 90009(US)**

(72) Inventor: **Saville, Marshall P.**
**15309 Yukon Avenue**
**Lawndale California 90260(US)**

(72) Inventor: **Gu, Alston Lee-Van**
**5832 Sunmist Drive**
**Rancho Palos Verdes California 90274(US)**

(74) Representative: **Roos, Michael John et al,**
**KILBURN & STRODE 30 John Street**
**London WC1N 2DD(GB)**

(54) **Thrust bearings.**

(57) Cooling is provided for a foil thrust bearing by means of flow openings in the thrust bearing disc or restrictions in the flow underneath the thrust bearing disc or the combination of both.

FIG. 1

## Thrust Bearings

Process fluid or gas bearings are now being utilized in an increasing number of diverse applications. These fluid bearings generally comprise two relatively movable elements with a predetermined spacing therebetween filled with a fluid such as air, which, under dynamic conditions, forms a supporting wedge sufficient to prevent contact between the two relatively movable elements.

More recently, improved fluid bearings, particularly gas bearings of the hydrodynamic type, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambiemt atmosphere as the bearing fluid makes these hydrodynamic, fluid film lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary

2 0186263

externally to pressurize the fluid between the bearing surfaces to increase the load carrying capability. While these externally pressurized or hydrostatic fluid bearings do increase the load capacity, they do introduce the requirement for an external source of clean fluid pressure.

In order properly to position the compliant foils between the relatively movable bearing elements, a number of mounting means have been deviced. In thrust bearings, it is conventional practice to mount a plurality of individually spaced foils on a foil bearing disc such as by spot welds and position the foil bearing disc on one of the bearing elements as exemplified in U.S. Patent No. 3,635,534.

To establish stability of the foils in most of these mounting means, a substantial pre-load is required on the foil. That is, the individual foils must be loaded against the relatively movable bearing element opposed to the bearing element upon which the foils are mounted. It has been conventional to provide separate compliant stiffener elements or underfoils beneath the foils to supply this required preload as exemplified in U.S. Patent Nos. 3,893,733 and 4,153,315.

In order to facilitate start-up and to reduce bearing wear, the individual foils may be coated with a high lubricity material such as a stratified fluorocarbon, molybdenum disulfide, graphite fluoride, or the like. The use of such coatings, while enhancing the life of the foil bearing, introduces certain operating temperature limitations thereon. As still higher temperature environments are envisaged for foil bearing operation, the temperature limitations of these coatings become critical since they cannot survive as high a temperature as the underlying metallic foil. Thus, higher temperature coatings must be developed or means found to limit the operating temperature at the coated foil surfaces. Examples of prior cooling schemes for foil bearings can be found in U.S. Patent Nos. 4,227,753 and 4,247,155.

According to one aspect of the present invention a fluid thrust bearing comprises a pair of members arranged for relative rotation, one of said members being arranged rotatably to support the other by means of a compliant foil bearing operably disposed between the members, the foil bearing comprising a thrust disc mounted on a first of said pair of members and having a plurality of foil elements, fluid being arranged to be directed towards the region between opposed faces of the pair of members, characterised by flow directing means for ensuring that all or substantially all of the fluid passes to and through the region between the thrust disc and a second of said pair of members.

According to another aspect of the present invention a fluid thrust bearing comprises a pair of members arranged for relative rotation with respect to one another, one of said pair of members being arranged rotatably to support the other, a compliant foil bearing operably disposed between and mounted on one of said pair of relatively rotatable members, said compliant foil bearing comprising a thrust disc having a plurality of spaced compliant foil elements, characterised by means for providing or enhancing flow of cooling fluid to the upper surface of the thrust disc comprising flow passages in the thrust disc and/or deflector means carried by one of the pair of members or the thrust disc.

The invention may be carried into practice in various ways but several specific embodiments will now be described by way of example, with reference to the accompanying drawings, in which:

Figure 1 is an exploded perspective view of a foil thrust bearing according to one embodiment of the present invention;

Figure 2 is an enlarged fragmentary view, partially cut away, of the bearing disc of the foil thrust bearing of Figure 1;

Figure 3 is an enlarged fragmentary view of an alternative form of bearing disc for the foil thrust bearing of Figure 1;

Figure 4 is a transverse cross-sectional view of an alterantive embodiment of foil thrust bearing having a flow shield integral with the thrust bearing disc;

Figure 5 is a fragmentary plan view of the thrust bearing disc of Figure 4 during its fabrication;

Figure 6 is a transverse cross-section of parts of an alternative foil thrust bearing having a flow shield integral with the periphery of the thrust bearing disc;

Figure 7 is a fragmentary sectional view of an alternative foil thrust bearing of the present invention;

Figure 8 is a fragmentary sectional view of yet another foil thrust bearing of the present invention;

Figure 9 is a top plan view of the underspring of the foil thrust bearing of Figure 1;

Figure 10 is a cross-section of part of the underspring of Figure 9 taken along line 10-10 thereof; and

Figure 11 is an underplan view of the underspring of Figures 9 and 10.

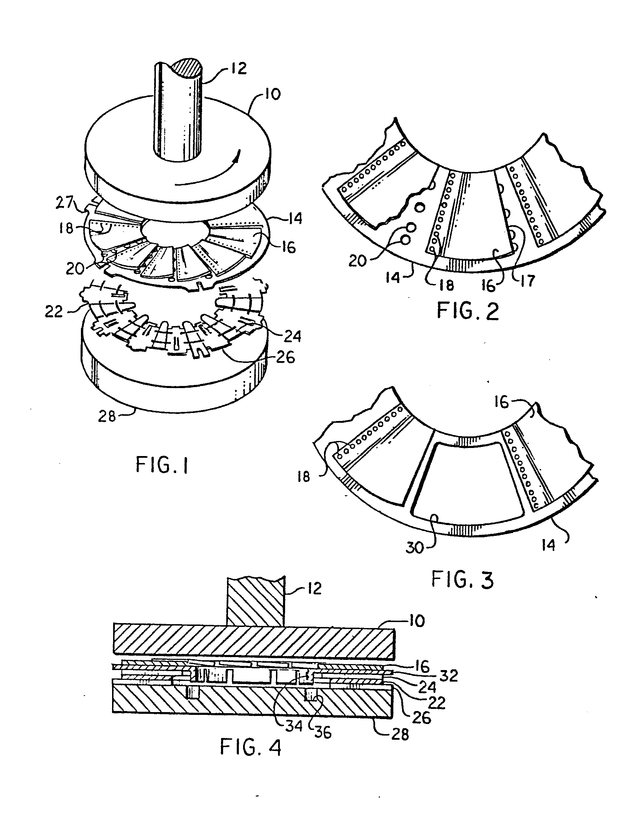

Figures 1 and 2 illustrate a first embodiment a thrust bearing of the present invention. As illustrated in Figure 1, a thrust runner 10 including a shaft 12 is rotatably supported on a thrust plate 28 by means of a thrust bearing disc 14 and a thrust bearing stiffener or underspring 22. In operation, e.g. in aircraft propulsion systems, so-called bleed-air is employed as the fluid bearing material, and this is supplied to the region generally between the opposed facesof the thrust runner 10 and the thrust plate 28. It is not essential in this embodiment for the air between these faces to be pressurised in order to provide the load-bearing capability. The thrust bearing disc 14 includes a plurality of resilient metallic foils 16 each secured in position by a transverse row of spot welds 18 or by other suitable means. The thrust bearing underspring 22 includes a plurality of generally radially upper ridges 24 and lower ridges 26 alternately disposed thereon to provide perload and support for the thrust bearing disc 14 as described in copending EP Application                    , corresponding to U.S. Serial No. 672,982.

As more fully shown in Figure 2, a plurality of cooling holes 20 are disposed in the thrust bearing disc 14 under the trailing edges 17 of the resilient foils 16. Although shown as a single row of holes for each foil in Figure 1 and 2, the exact number and precise location of these cooling holes 20 may be designed to permit the flow of sufficient bleed air from underneath the thrust bearing disc 14 as cooling fluid to cool the upper surface of the foils 16 which may be coated with a high lubricity material. This air which is directed upwards from below the disc 14 and mixes with the bleed air above the disc (and which tends to be heated by the bearing functions it performs).

Figure 3 illustrates an alternative arrangement in which a single much larger cooling hole 30 is provided between the foils 16 attached to the thrust bearing disc 14 by the spot welds 18. Whereas in the embodiment of Figures 1 and 2, the number of foils provided on the disc 14 is maintained with the cooling holes 20 provided generally between adjacent foils, or just under the trailing edges of the foils, the embodiment of Figure 3 generally eliminates one-half of the individual foils and substitutes for alternate foils the much larger cooling holes 30. Thus, while additional cooling can be provided in the Figure 2 embodiment without any significant decrease in load, the performance of the Figure 3 embodiment, which eliminates generally one-half of the foils, will decrease the load bearing capacity of the thrust bearing. The Figure 3 embodiment will, however, provide much greater cooling since the size of the cooling passages are much larger. It is thus to be appreciated that the arrangement of foils and holes can be varied depending on the loading, cooling requirements and other parameters of any particular design.

Illustrated in Figure 4 is a foil thrust bearing of somewhat different design in which a thrust bearing disc 32, which supports foils 16, is effectively in the form of a washer having a central hole the peripheryof which is provided with a downturned and castellated flange or shield 34. This flange or shield 34 will decrease the flow of the bleed air or fluid through the underspring 22 and thereby increase of the flow of bleed air or fluid across the top of the thrust bearing disc 32 upon which are mounted the foils 16. In this way the effect of the the available bleed air is maximised, or putting it another way, an increased effect is obtained with no need to increase the actual volume of bleed air required.  Since the thrust bearing disc 32, depending upon load and operating conditions, will move downward and compress the underspring 22, an annular groove 36 may be provided in the thrust plate 28 to prevent contact between the lower edge of the flange 34 and the thrust plate 28.

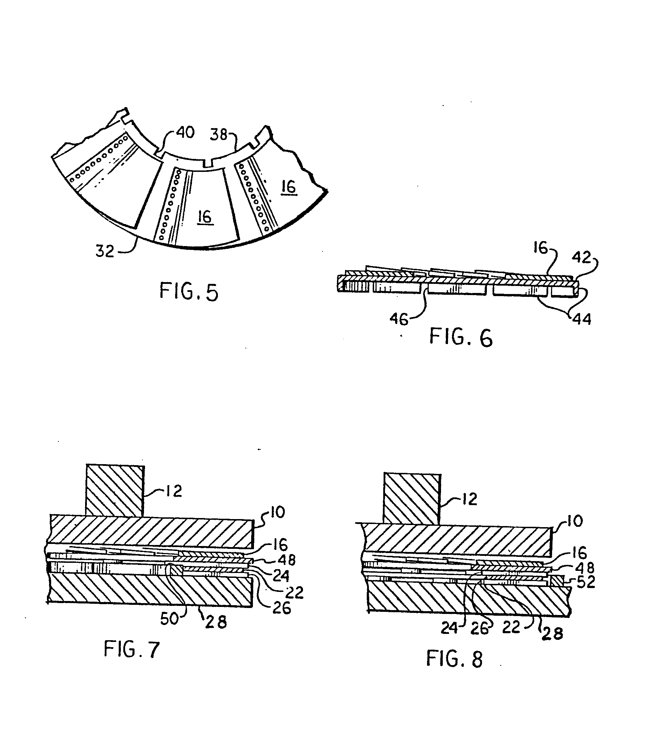

The thrust bearing disc 32 having its castellated flange 34 may be fabricated in accordance with the illustration in Figure 5.  The washer-like disc 32 is provided with spaced slots 40 around the periphery of its centre hole, thus leaving projections 38 which may be bent in a downward direction away from the foils 16 thereby to provide individual castellated portions of the axial flange or shield 34.

Figure 6 illustrates an alterantive arrangement in which flow shields 44 are provided at the outer periphery of the thrust bearing disc 42.  A plurality of slots 42 will be present if the flange or shields 44 are produced in the same manner as the flange or shield 34 at the central hole of the disc of Figures 4 and 5.

Instead of providing flow shields integral with the thrust bearing disc, it is possible to provide suitable flow shields either integral with or attached to the thrust plate 28.  As shown in Figure 7, a flow control shield 50 may be provided immediately below the periphery of the central hole of the thrust bearing disc 48 while Figure 8 illustrates an alternative embodiment where the shield 52 is provided adjacent the outer diameter of the thrust bearing disc 48.

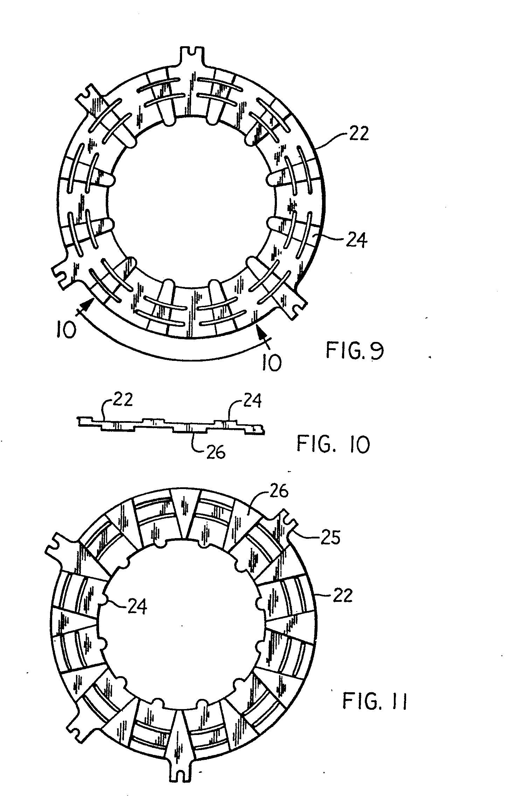

Figures 9 to 11 illustrate the underspring 22 utilised in the foil thrust bearing of this invention. Besides the upper ridges 24 and lower ridges 26, also shown are the projections 25 which can be utilised to maintain the position of the underspring 22 with respect to the thrust plate 28. Similar projections 27 may be provided on the thrust bearing disc 14.

As should be readily apparent, it is the intent of each of the above embodiments to provide cooling flow to the upper surfaces of the thrust bearing disc which includes foils coated with a high lubricity material and which are subjected to the highest temperatures. This cooling flow, if not directed to the upper surfaces of the thrust bearing disc, would otherwise pass through the underspring underneath the thrust bearing disc. This objective of the invention can be accomplished in different ways but the specific embodiments either provide openings in the thrust bearing disc, or provide restrictions to the flow of cooling fluid underneath the thrust bearing disc. It should be recognised that these two features can be combined such that there would be both cooling flow openings in the disc and flow restriction thereunder.

While specific embodiments of the invention have been illustrated and described, it is understood that these are provided by way of example only. While the invention is shown as a thrust bearing, it should be readily apparent that it is equally applicable to a conical bearing which has a thrust component.

Claims:

1.    A fluid thrust bearing comprising a pair of members (10,28) arranged for relative rotation, one of said members being arranged rotatably to support the other by means of a compliant foil bearing operably disposed between the members, the foil bearing comprising a thrust disc (14) mounted on a first (28) of said pair of members and having a plurality of foil elements (16), fluid being arranged to be directed towards the region between opposed faces of the pair of members (10,28) characterised by flow directing means (20; 30; 34; 44; 50; 52) for ensuring that all or substantially all of the fluid passes to and through the region between the thrust disc (14) and a second (10) of said pair of members.

2.    A fluid thrust bearing comprising a pair of members (10,28) arranged for relative rotation with respect to one another, one of said pair of members (28) being arranged rotatably to support the other (10), a compliant foil bearing operably disposed between and mounted on one of said pair of relatively rotatable members, said compliant foil bearing comprising a thrust disc (14) having a plurality of spaced compliant foil elements (16) characterised by means for providing or enhancing flow of cooling fluid to the upper surface of the thrust disc comprising flow passages (20,30) in the thrust disc and/or deflector means (34; 44; 50; 52) carried by one of the pair of members or the thrust disc.

3.    A fluid thrust bearing as claimed in claim 2 characterised in that the flow passages extend through said thrust disc and are positioned generally between the spaced compliant foil elements (16).

4.    A fluid thrust bearing as claimed in claim 3 characterised in that the flow passages comprise transverse rows of openings (20) positioned generally at the trailing edges of the spaced compliant foil elements (16).

5.    A fluid thrust bearing as claimed in claim 3 characterised in that the foil element (16) are circumferentially spaced apart and have one or more flow passages (30) therebetween.

6.    A fluid thrust bearing as claimed in claim 5 characterised by a single flow passage (30) between each adjacent pair of foil elements (16), and of an area substantially the same as the area of an individual foil element.

7.    A fluid thrust bearing as claimed in claim 2 characterised in that the deflector means (34;44) is integral with the thrust disc (14).

8.    A fluid thrust bearing as claimed in claim 7 characterised in that the deflector means is a flange or series of flange portions (34;44) disposed around either a central aperture or the external periphery of said thrust disc (14).

9.    A fluid thrust bearing as claimed in any one of the preceding claims 1 to 8 characterised by a foil stiffener disc (22) disposed between the thrust disc (14) and the one of the pair of members (28) on which the thrust disc is mounted.

10. A fluid thrust bearing as claimed in claim 9 characterised in that the deflector means is an annular shield (50) at the periphery of a central aperture in said foil stiffener disc (22).

11. A fluid thrust bearing as claimed in claim 9 characterised in that the deflector means is an annular shield (52) at the outer diameter of said foil stiffener disc (24).

12. A thrust disc for a foil bearing comprising: a thin compliant flat ring disc; a plurality of individual, spaced compliant foil elements mounted upon said disc; characterised by a plurality of openings (20;30) in said disc and positioned generally between the individual, spaced, compliant foil elements.

13. The thrust disc of claim 12 characterised in that said plurality of openings in said disc are transverse rows of openings (20) one row being positioned generally at the trailing edge of each individual, spaced, compliant foil element (16).

14. The thrust disc of claim 12 characterised in that the plurality of openings comprise one (30) between each adjacent pair of foil elements, and generally of the same area as an individual compliant foil element (16).

15. A fluid thrust bearing as claimed in Claim 4, characterised in that the transverse rows of openings (20) are positioned at least partially below the trailing edges of the respective foil elements (16).

FIG. 1

FIG. 2

FIG. 3

FIG. 4

0186263

FIG. 5

FIG. 6

FIG. 7

FIG. 8

FIG. 9

FIG. 10

FIG. 11